# FASCICULE DE BREVET EUROPEEN

(11) **EP 2 492 884 B1**
(45) Date de publication et mention de la délivrance du brevet: **29.11.2017**
(21) Numéro de dépôt: 12157131.9
(22) Date de dépôt: 27.02.2012
(51) Int. Cl.: G08C 17/02, H04L 12/28

(54) **DISPOSITIF DE COMMANDE COMPRENANT UNE INTERFACE CAPABLE DE PROPOSER LE PROCHAIN ORDRE DE COMMANDE À TRANSMETTRE À UN ÉQUIPEMENT DOMOTIQUE**
STEUERVORRICHTUNG, DIE EINE SCHNITTSTELLE UMFASST, DIE IN DER LAGE IST, DEN NÄCHSTEN BEFEHL AN EIN HAUSHALTSGERÄT VORZUSCHLAGEN
CONTROL DEVICE INCLUDING AN INTERFACE CAPABLE OF PROPOSING THE NEXT CONTROL ORDER TO BE SENT TO A HOME-AUTOMATION APPARATUS

(30) Priorité: 28.02.2011 FR 1151589
(43) Date de publication de la demande: 29.08.2012
(73) Titulaire: SOMFY ACTIVITES SA, 74300 Cluses (FR)
(72) Inventeur: Cavarec, Pierre-Emmanuel, 74130 Mont Saxonnex (FR); Mignot, Pierre, 05380 Chateauroux Les Alpes (FR)
(74) Mandataire: Novaimo

(56) Documents cités:
- US-A1- 2004 268 391
- US-A1- 2006 050 142

## Description

L'invention concerne un dispositif de commande destiné à être utilisé au sein d'une installation domotique comprenant au moins un équipement domotique, le dispositif de commande étant apte à communiquer avec au moins un équipement domotique de l'installation pour lui transmettre des ordres de commande. L'invention concerne aussi un procédé de fonctionnement d'un tel dispositif de commande. L'invention concerne encore une installation domotique comprenant un tel dispositif domotique.

De tels dispositifs de commande peuvent être par exemple utilisés pour commander les mouvements d'éléments mobiles d'un bâtiment tels que des stores, des volets roulants des portes ou des portails pilotés par des actionneurs électromécaniques.

Dans la suite de ce document, on pourra utiliser la dénomination « télécommande » afin de désigner un dispositif de commande sans fil selon l'invention.

Cependant, l'objet de cette invention ne se limite pas aux dispositifs sans fil; un dispositif de commande filaire peut tout aussi bien mettre en oeuvre le procédé décrit dans ce document. De même, pour les dispositifs sans fil, et de manière non limitative, la communication peut être uni- ou bidirectionnelle, radio ou infra rouge par exemple.

Les télécommandes sans fil pour commander les équipements domotiques comprennent souvent un nombre limité de boutons de commande permettant d'émettre des ordres de commande. Dans certains cas, ces télécommandes sont malgré tout utilisées pour émettre différents ordres de commande en direction de différents équipements, une touche pouvant être associée à un équipement, cette même touche permettant d'envoyer des ordres de différentes natures à l'équipement concerné. Les ordres de commande transmis peuvent correspondre à des ordres de changement d'état : chaque ordre de commande dit ordre séquentiel, a ainsi une signification qui dépend de l'état dans lequel se trouve l'équipement domotique commandé. Ainsi, par exemple, un appui sur un bouton d'une télécommande peut donner lieu à une action d'ouverture d'un volet roulant si celui-ci se trouve fermé et donner lieu à une action de fermeture du volet roulant si celui-ci se trouve ouvert. Le problème dans ce cas est que l'utilisateur ne sait pas forcément quel ordre va être envoyé et exécuté par l'équipement domotique, en particulier s'il s'agit d'une commande à distance sans visibilité de l'élément mobile.

Dans la suite de ce document, on utilise indifféremment les termes « ordre », « commande » et « ordre de commande » pour désigner le contenu des informations envoyées de la télécommande vers l'équipement domotique. Ces termes désignent en particulier les contenus provoquant un mouvement d'un élément mobile d'un équipement domotique ou une activation d'un équipement domotique ou une désactivation d'un équipement domotique.

Prenons pour autre exemple une télécommande à un seul bouton, servant à piloter une porte de garage (appui 1 : ordre de montée si la porte de garage n'est pas complètement ouverte, appui 2 : ordre d'arrêt si la porte est en mouvement, appui 3 : ordre de descente, appui 4 : ordre d'arrêt...). Si pour une raison ou une autre, le mouvement est automatiquement stoppé (par exemple parce que la porte rencontre un obstacle) ou si l'utilisateur stoppe le mouvement de sa porte de garage alors qu'elle est en train de se fermer (la porte est en mouvement, et un appui sur le bouton de commande stoppe ce mouvement), par exemple parce qu'il se rend compte qu'un obstacle va gêner la fermeture complète de sa porte, lorsqu'il aura dégagé l'obstacle et qu'il va vouloir terminer la fermeture de sa porte, il ne va pas forcément savoir quel ordre de commande va être envoyé par sa télécommande et pourrait être surpris de l'ordre envoyé; en l'occurrence, pour l'exemple cité, cela pourrait être un ordre de remontée car l'ordre précédant l'arrêt demandé par l'utilisateur était un ordre de descente (fermeture). Le résultat de l'appui sur le bouton aura donc un effet contraire à celui souhaité par l'utilisateur. A contrario, cet ordre de remontée pourrait avoir un effet apprécié par l'utilisateur : la remontée de la porte de garage pourrait aider l'utilisateur à dégager l'obstacle gênant. Il s'ensuit dans certaines situations des activations non nécessaires de la porte.

Il est connu du document EP1783716 un procédé de fonctionnement d'un réseau domotique proposant une étape de retour d'information de la part des appareils domotiques pilotés par une télécommande bidirectionnelle, la télécommande étant apte à afficher les informations reçues. Cette étape permet à l'utilisateur de vérifier en particulier, comment l'ordre, par exemple un ordre de changement d'état, émis par la télécommande, a été interprété.

Le document US2006/50142 décrit un dispositif de télécommande universelle comprenant un écran tactile dont l'affichage évolue au fil des actions exercées sur l'écran pour afficher l'ensemble des touches de commande permettant de commander chaque équipement domotique, c'est-à-dire permettant d'afficher sur l'écran simultanément toutes les touches de commande équivalentes à celles de la télécommande d'origine de l'équipement domotique.

Le document US2004/268391 décrit un dispositif de télécommande dans lequel on peut illuminer une ou plusieurs touches afin d'attirer l'attention de l'utilisateur sur ces touches et sur les ordres qui y correspondent.

Le but de l'invention est de fournir un procédé de fonctionnement d'un dispositif de commande augmentant la simplicité et le confort d'utilisation et améliorant les procédés connus de l'art antérieur. En particulier, l'invention propose un procédé de fonctionnement simple et convivial permettant à l'utilisateur d'éviter de réaliser des étapes de tâtonnement ou des étapes d'activations non nécessaires d'un équipement domotique. L'invention s'applique en particulier à une télécommande présentant de petites dimensions et sur laquelle un nombre limité de boutons de commande peut être disposé. L'invention propose aussi un dispositif de commande mettant en oeuvre un tel procédé.

Selon l'invention, le procédé régit le fonctionnement d'un dispositif de commande d'un équipement domotique. Il comporte au moins une étape de sélection d'un ordre de commande possible parmi une pluralité d'ordres de commande prédéfinis, pouvant être émis par le dispositif de commande et au moins une étape d'affichage de l'ordre sélectionné par ce dispositif de commande.

L'ordre de commande sélectionné et affiché par le dispositif de commande peut être le prochain ordre que le dispositif de commande propose d'envoyer à l'équipement domotique.

La sélection de l'ordre affiché par le dispositif de commande peut résulter d'une analyse de l'historique des ordres précédemment envoyés ou d'une analyse de l'état réel de l'équipement domotique ou d'une séquence d'ordres prédéfinie par l'utilisateur.

Le procédé peut comporter une étape de modification, selon un choix de l'utilisateur, de l'ordre sélectionné par le dispositif de commande.

L'étape de modification peut comprendre un défilement de manière séquentielle de la pluralité des ordres de commande pouvant être émis.

Le procédé peut comprendre une étape de validation et d'envoi de l'ordre de commande sélectionné.

Le procédé peut comprendre une étape d'affichage d'un ordre d'arrêt suite à l'étape de validation et d'envoi de l'ordre de commande sélectionné.

Selon l'invention, le dispositif de commande d'un équipement domotique comporte des moyens matériels et de traitement aptes à mettre en oeuvre le procédé de fonctionnement précédemment défini.

Les moyens matériels et de traitement peuvent comprendre un moyen de sélection d'un ordre de commande et au moins un dispositif d'affichage destiné à afficher un symbole représentant l'ordre de commande sélectionné.

Les moyens matériels et de traitement peuvent comprendre un moyen de modification de l'ordre sélectionné.

Les moyens matériels et de traitement peuvent comprendre un moyen d'émission de l'ordre sélectionné.

Une même touche peut comprendre le dispositif d'affichage et le moyen de modification, cette même touche étant apte à déclencher l'envoi de l'ordre de commande lorsqu'elle est activée.

Une première touche peut comprendre le dispositif d'affichage et une deuxième touche peut comprendre au moins l'un des moyens de modification ou de déclenchement de l'envoi de l'ordre de commande. L'invention concerne aussi un support d'enregistrement de données lisible par un calculateur sur lequel est enregistré un programme informatique comprenant des moyens de codes de programme informatique de mise en oeuvre des phases et/ou étapes du procédé défini précédemment.

L'invention concerne encore un programme informatique comprenant un moyen de code de programme informatique adapté à la réalisation des étapes du procédé défini précédemment, lorsque le programme tourne sur un ordinateur ou calculateur.

L'invention sera mieux comprise à la lecture de la description qui va suivre, donnée uniquement à titre d'exemple et faite en se référant aux dessins annexés sur lesquels :
La figure 1 est un schéma d'un mode de réalisation d'une installation ou réseau domotique selon l'invention.
Les figures 2 à 6 illustrent quelques exemples de modes de réalisation possibles d'un dispositif de commande selon l'invention.
La figure 7 est un ordinogramme d'un premier mode d'exécution du procédé de fonctionnement selon l'invention.
La figure 8 est un ordinogramme d'un deuxième mode d'exécution du procédé de fonctionnement selon l'invention, pour un dispositif de commande bidirectionnel.
La figure 9 est un ordinogramme d'un troisième mode d'exécution du procédé de fonctionnement selon l'invention, pour un dispositif de commande monodirectionnel.
La figure 10 illustre les étapes successives d'un mode d'exécution du procédé de fonctionnement selon l'invention, et bien que l'invention puisse être appliquée à tout type de réseau d'équipement domotique, elle est décrite dans son application à une porte de garage motorisée pilotée par une télécommande radio bidirectionnelle, dotée d'un seul bouton, lequel bouton est également le moyen d'affichage de la prochaine commande proposée.
La figure 11 illustre les étapes successives d'un mode d'exécution du procédé de fonctionnement selon l'invention appliqué à un dispositif de commande unidirectionnel.

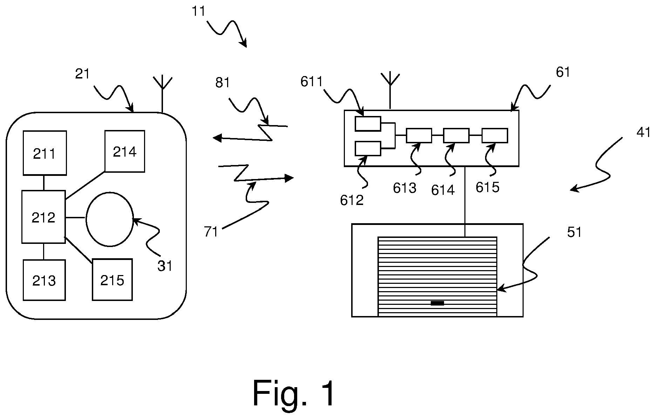

Un mode de réalisation d'installation domotique 11 ou de réseau domotique, représenté à la figure 1, comprend une porte de garage motorisé 41 et un premier mode de réalisation d'un dispositif de commande, comme une télécommande sans fil 21, le dispositif de porte de garage motorisée et la télécommande sans fil communiquant par le biais de signaux électromagnétiques 71 émis par la télécommande 21 et de signaux électromagnétiques 81 émis par le dispositif de porte de garage motorisé 41.

Le dispositif de porte de garage motorisé 41 comprend un actionneur 61 entraînant la porte 51. L'actionneur 61 comprend un moteur électrique 615, des moyens d'émission 611 et de réception 612 de signaux électromagnétiques, une unité logique de traitement 613 et des moyens 614 de pilotage de l'alimentation du moteur électrique. L'unité logique de traitement 613 comprend un microprocesseur et des moyens de traitement du signal ou des moyens logiciels permettant d'interpréter un signal tel qu'un ordre de commande reçu par les moyens de réception de signaux. Cette interprétation permet de générer des signaux de pilotage du moteur qui sont transmis aux moyens de pilotage de l'alimentation du moteur.

La télécommande 21 sans fil comprend une alimentation 213, une unité logique de traitement 212, des moyens de réception de signaux électromagnétiques 211, des moyens d'émission de signaux électromagnétiques 214, une mémoire 215 dans laquelle sont stockées les différentes commandes qui peuvent être émises à destination de l'actionneur de porte 61, et une interface homme-machine 31 équipée d'un dispositif d'affichage (par exemple un écran ou des diodes électroluminescentes) apte à afficher un symbole, représentatif d'un type d'ordre comme par exemple une flèche orientée vers le haut pour indiquer un ordre de montée, un carré pour indiquer un ordre d'arrêt... L'unité logique de traitement 212 comprend un microprocesseur.

Le dispositif de commande, en particulier l'unité logique de traitement, comprend des moyens matériels et des moyens logiciels ou de traitement la rendant apte à définir les priorités entre les différents ordres de commandes qui peuvent être émis à destination de l'actionneur de porte 61 afin de choisir le prochain ordre de commande à proposer à l'utilisateur. Cet ordre est affiché sur le dispositif d'affichage de l'interface homme-machine 31 avant qu'il ne soit émis à destination de l'actionneur 61. Les priorités entre les différents ordres de commande possibles sont déterminées par exemple en fonction de l'historique des ordres précédemment envoyés, de l'état de l'actionneur, des diverses informations reçues de la part de l'actionneur.... L'utilisateur pourrait également configurer une séquence d'ordre à exécuter, ou personnaliser les réactions de son produit en fonction de l'état dans lequel il se trouve; par exemple, pour une porte de garage ayant rencontré un obstacle à la descente, et s'étant arrêtée sur cet obstacle, la télécommande proposera par défaut l'envoi d'un ordre de montée pour le prochain ordre à envoyer, alors que l'utilisateur pourrait, dans ce cas de figure, préférer envoyer systématiquement un ordre de descente. La liste des commandes stockées dans la mémoire 215 n'est pas figée et peut tout à fait être mise à jour au cours de la vie du produit à l'aide d'un outil spécifique, ou d'une télécommande plus évoluée, ou à l'aide de tout autre moyen permettant d'entrer en communication avec le dispositif de commande. Cette liste de commandes n'est pas forcément constituée de commandes simples uniquement, elle pourrait également contenir des scenarii permettant de lancer une succession d'envois de commandes simples à au moins un équipement domotique de l'installation; on pourrait par exemple disposer d'un scénario « je quitte mon domicile » qui, une fois sélectionné et lancé, pourrait demander à la porte de garage de se fermer, à l'alarme de se mettre en route, aux volets roulants de se fermer, et au store de terrasse de se replier. Chaque scenario pourra être représenté par un symbole spécifique (par exemple, le scénario « je quitte mon domicile » pourrait être symbolisé par un cadenas, un scénario « tombée du jour » par une lune). Si une liste de scenarii prédéfinis peut être proposée à l'utilisateur, celui-ci a également la possibilité de définir ses propres scenarii et de modifier ceux qui lui sont proposés par défaut.

Les signaux 71 émis à l'aide des moyens d'émission de signaux électromagnétiques 214 par la télécommande comprennent des ordres de commande du dispositif de porte de garage motorisé.

Les signaux 81 émis à l'aide des moyens d'émission de signaux électromagnétiques 611 par le dispositif de porte motorisé en direction de la télécommande peuvent par exemple être des signaux d'information, concernant par exemple l'interprétation des ordres de commande reçus. Cette information peut être par exemple une information de bonne réception de l'ordre de commande, ou une information de bonne exécution de cet ordre, ou au contraire une information de non exécution de cet ordre, la raison de cette non-exécution pouvant être précisée dans cette information. Ces signaux 81 peuvent d'autre part véhiculer des informations relatives à l'état de la porte. Des exemples d'états de la porte motorisée sont par exemple : la porte est complètement ouverte, la porte est complètement fermée, la porte est dans une position intermédiaire, la porte s'ouvre, la porte se ferme, un obstacle a été détecté, le mouvement de la porte a été inversé, l'actionneur se trouve dans un mode de fonctionnement normal ou l'actionneur se trouve dans un mode de fonctionnement anormal. D'autres états peuvent être envisagés.

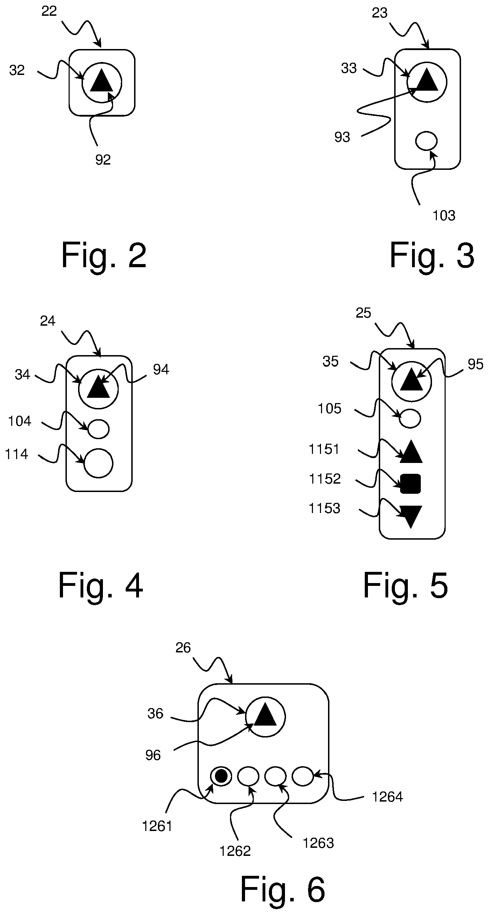

La figure 2 illustre un deuxième mode de réalisation du dispositif de commande 22, dans lequel il n'existe qu'un unique élément d'interface homme-machine 32 capable d'afficher un symbole 92 représentatif d'un ordre de commande proposé par le dispositif de commande. Un appui sur l'élément 32 permet une validation, cette validation entraînant le déclenchement de l'envoi de cet ordre. Cet unique élément peut également permettre de modifier l'ordre proposé grâce à une ergonomie spécifique liée à l'élément 32, avant de valider et de déclencher l'envoi de l'ordre de commande. Pour valider et envoyer l'ordre proposé, l'utilisateur pourrait par exemple procéder à un appui « court » (d'une durée inférieure à 800ms par exemple) sur l'élément 32, et pour modifier cet ordre il pourrait par exemple procéder à un appui « long » (d'une durée supérieure à 1.2s par exemple) sur l'élément 32, chaque appui « long » permettant d'afficher une commande différente (les commandes pouvant ainsi défiler en boucle).

La figure 3 illustre un troisième mode de réalisation du dispositif de commande 23. Celui-ci comprend un premier élément d'interface homme-machine 33 muni d'une interface d'affichage apte à afficher un symbole 93 représentatif de l'ordre de commande proposé et un deuxième élément d'interface homme-machine 103. Dans une première variante de réalisation, l'élément 33 sert uniquement d'afficheur de l'ordre de commande proposé, et l'élément 103 permet à l'utilisateur, par une action sur celui-ci de modifier cet ordre puis de le valider. La validation entraîne automatiquement l'envoi de l'ordre. La modification de l'ordre proposé peut se faire par exemple par des appuis de courte durée, et sa validation par un appui plus long, ou vice-versa.

Alternativement, l'élément 33 peut servir d'afficheur et de moyen de validation puis d'envoi de l'ordre sélectionné, l'élément 103 permettant uniquement de modifier l'ordre proposé par le dispositif de commande.

Alternativement, l'élément 33 peut servir d'afficheur et de moyen de modification de l'ordre proposé, l'élément 103 permettant uniquement de valider puis d'envoyer l'ordre sélectionné. Dans ce cas, l'élément 33 est aussi une touche.

La figure 4 illustre un quatrième mode de réalisation 24. Il comprend un premier élément d'interface homme-machine 34 apte à afficher un symbole 94 représentatif de la commande proposée, un deuxième élément d'interface homme-machine 114 permettant de modifier la commande proposée et un troisième élément d'interface homme-machine 104 permettant de déclencher l'envoi de la commande sélectionnée. Les appuis successifs sur l'élément 114 font défiler la liste des commandes possibles sur l'élément d'affichage 34.

La figure 5 illustre un cinquième mode de réalisation 25. Il comprend un élément d'affichage 35 d'un symbole 95 représentatif de la commande proposée, des éléments d'interface homme-machine 1151, 1152, 1153 permettant de modifier la commande proposée, et un élément d'interface homme-machine 105 distinct permettant de déclencher l'envoi de la commande sélectionnée. Si la commande affichée sur l'élément d'affichage 35 ne convient pas, il suffit de sélectionner la commande souhaitée directement à l'aide des éléments 1151, 1152 et 1153. Ce mode de réalisation présente un intérêt particulier si, en fonction de la durée des appuis sur les touches 1151, 1152 et 1153, ou en fonction d'une ergonomie d'utilisation particulière de ces touches (appuis successifs par exemple), des ordres de natures différentes sont envoyés. Par exemple, un appui court sur la touche 1152 va sélectionner un ordre d'arrêt alors qu'un appui long va sélectionner l'ordre « aller en position prédéfinie 1 », un appui court sur la touche 1151 va sélectionner un ordre de montée alors qu'un appui long va sélectionner l'ordre « aller en position prédéfinie 2»... La sélection des différents ordres est facilitée.

La figure 6 illustre un sixième mode de réalisation 26. Ce dispositif est une variante de celui décrit sur la figure 2. L'élément 36 est apte à réaliser les mêmes fonctions que l'élément 32. La différence réside dans le fait que le dispositif 26 est apte à commander différents équipements et la sélection de l'équipement que l'utilisateur souhaite piloter se fait à l'aide des éléments de sélection 1261, 1262, 1263, et 1264; lorsque l'utilisateur a agi sur l'élément 1261, comme illustré sur la figure, le dispositif va piloter un premier équipement, s'il a agi sur l'élément 1262, il va piloter un second équipement et ainsi de suite.

On peut remarquer que la liste des commandes possibles peut être différente d'un équipement à l'autre. Par exemple, si le premier équipement est de type porte de garage ou volet roulant, la liste des commandes possibles pourrait comprendre des commandes de montée ou ouverture, de stop, de descente ou fermeture. Si le second équipement est de type store vénitien, la liste des commandes possibles, pourrait comprendre les commandes suivantes : montée, stop, orientation des lames, descente. Un autre équipement pourrait être un portail pour lequel la liste des commandes possibles pourrait comprendre une commande d'ouverture partielle, une commande d'ouverture totale, une commande de fermeture...

A noter que les dispositifs 23, 24 et 25 pourraient également présenter ce type d'interface de sélection afin de piloter plusieurs équipements.

L'ensemble des éléments 32, 33, 34, 35, 36, ainsi que tous les autres éléments de type « bouton » représentés sur les figures 2 à 6 peuvent être de technologie « tactile ». Ils peuvent ainsi être des touches virtuelles, ou peuvent être montés sur un bouton mécanique mobile.

Dans tous les cas de figure, au moins un des éléments pourra être enrichi d'un capteur type capacitif par exemple, capable de détecter l'approche de la main de l'utilisateur ce qui permet de ne réveiller le dispositif de commande et de n'afficher la commande qu'au moment où l'utilisateur s'apprête à utiliser réellement sa télécommande. Alternativement, dans un autre mode de réalisation, par exemple lorsque la télécommande n'est pas équipée de moyens de détection de l'approche de la main de l'utilisateur, un appui sur l'une quelconque des touches du dispositif de commande pourra réveiller le dispositif en veille. De préférence, cet appui n'aura pas d'autre fonction que la fonction de réveil.

Alternativement, dans un autre mode de réalisation, par exemple lorsque l'interface homme-machine du point de commande utilise une technologie, par exemple de papier électronique (e-paper) ou encre électronique, ne consommant de l'énergie que lorsqu'il change d'état, l'affichage est permanent, et il n'est pas nécessaire de réveiller / d'endormir le point de commande.

Alternativement, dans un autre mode de réalisation, le réveil du point de commande peut se faire par simple prise en main ou par un mouvement de secousse ou par tout autre mouvement spécifique du point de commande ; la sélection des commandes dans la liste peut également se faire de cette manière (chaque secousse du point de commande provoque la sélection d'une nouvelle commande dans la liste).

Dans tous les cas de figure, le symbole représentatif de l'ordre de commande que l'on affiche sur le point de commande peut être enrichi de tout autre symbole, comme par exemple d'un symbole représentatif de l'impact qu'aura l'ordre proposé, s'il est sélectionné et envoyé à l'équipement domotique, sur la consommation énergétique globale de la maison. Par exemple, si la température extérieure est relativement basse, et que l'utilisateur sélectionne un ordre d'ouverture d'une fenêtre, on pourra afficher, en plus du symbole d'ouverture, un symbole indiquant que si cette ouverture est confirmée, elle provoquera un surcroit de consommation d'énergie. On pourrait imaginer une note correspondant à l'impact d'un ordre sur cette consommation (cette note pourrait être symbolisée par 1 à 3 étoiles vertes pour quantifier toute économie d'énergie, et par 1 à 3 étoiles rouges pour quantifier un gaspillage d'énergie par exemple).

Le dispositif de commande comprend des moyens matériels et/ou des moyens logiciels ou de traitement permettant de régir son fonctionnement conformément au procédé objet de l'invention, notamment de régir les étapes de ce procédé et leurs enchaînements. Les moyens matériels comprennent l'unité logique de traitement. Les moyens de traitement peuvent être contenus dans l'unité logique de traitement. Les moyens de traitement peuvent notamment comprendre un moyen de code de programme informatique adapté à la réalisation des étapes du procédé selon l'invention, lorsque le programme tourne sur un ordinateur. Les moyens de traitement comprennent le moyen de sélection d'un ordre de commande possible parmi une pluralité d'ordres de commande prédéfinis et, pouvant être émis par le dispositif de commande.

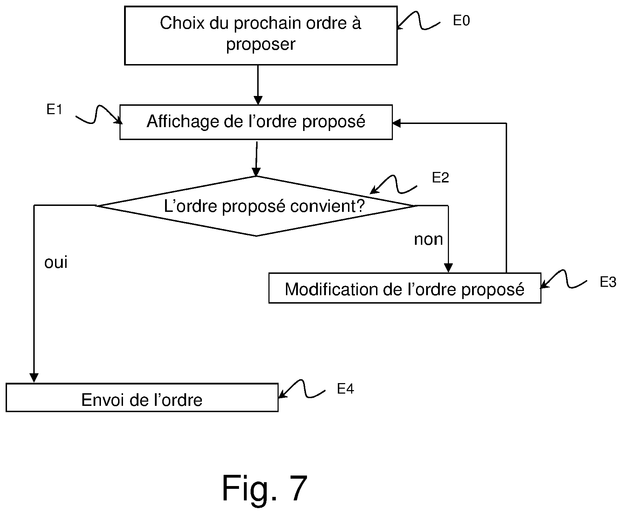

La figure 7 est un ordinogramme illustrant les étapes principales de mise en oeuvre d'un premier mode d'exécution du procédé de fonctionnement selon l'invention.

De préférence, lorsqu'il est inutilisé, un dispositif de commande autonome, c'est-à-dire ayant sa propre source d'énergie, se trouve dans un état de veille. Aussi, une étape de réveil doit être mise en oeuvre pour mettre fin à cet état de veille. Cette étape facultative n'est pas représentée et correspond au passage de l'état de veille de la télécommande à un état de fonctionnement normal avec une alimentation optimum. Pour un dispositif de commande filaire, c'est-à-dire étant relié au réseau d'alimentation électrique du bâtiment, il en est de même. Cette étape de réveil, peut être réalisée de différentes manières, comme décrit ci-dessus.

Une fois la télécommande réveillée, elle met en oeuvre une étape de choix ou de sélection du prochain ordre de commande à proposer dans une étape E0.

Ce choix peut se faire de différentes manières, il peut par exemple se baser sur:
- un historique des commandes précédemment envoyées,
- et/ou l'état réel de l'actionneur, ce qui est possible pour des télécommandes bidirectionnelles; pour cela, la télécommande, dès qu'elle est réveillée, peut envoyer une commande d'interrogation à l'actionneur afin de connaître son état réel,
- et/ou un certain nombre d'informations envoyées par l'actionneur à la télécommande (possible pour des télécommandes bidirectionnelles seulement).
- et/ou des statistiques d'utilisation du système au cours du temps
- et/ou une configuration préalablement définie par l'utilisateur.

Dans une deuxième étape E1, le dispositif de commande affiche l'ordre de commande choisi par le dispositif de commande. Cet ordre de commande est proposé à l'utilisateur pour le prochain envoi d'ordre, et ce, pendant un temps prédéfini D0 non représenté sur la figure. Sans aucune action de la part de l'utilisateur pendant ce temps D0, le dispositif de commande peut retourner automatiquement à l'état de veille.

Dans une troisième étape E2, le dispositif de commande détermine si l'ordre de commande proposé convient à l'utilisateur. Pour ce faire, le dispositif de commande analyse une action de l'utilisateur. Si l'ordre de commande convient, on passe directement à une étape E4 dans laquelle l'ordre de commande est envoyé. Sinon, dans une étape E3, le dispositif de commande modifie l'ordre de commande proposé en fonction des actions de l'utilisateur. A chaque fois que l'utilisateur modifie l'ordre proposé, le symbole correspondant à l'ordre modifié est affiché, c'est-à-dire qu'on boucle sur l'étape E1.

On a vu dans la description des figures 2, 3, 4, 5 et 6 ci-dessus, que cette modification pouvait être réalisée de différentes manières. Lors de l'étape E4, l'ordre sélectionné est validé puis envoyé à l'équipement domotique avec lequel la télécommande est apte à communiquer, l'envoi pouvant se faire de différentes manières (communication par ondes électromagnétiques, infrarouge, par liaison filaire...). L'équipement domotique piloté peut alors amorcer son action (par exemple de mouvement).

Suite à l'étape E4 d'envoi de l'ordre sélectionné, une première option consiste à endormir la télécommande et à la remettre directement dans son état de veille.

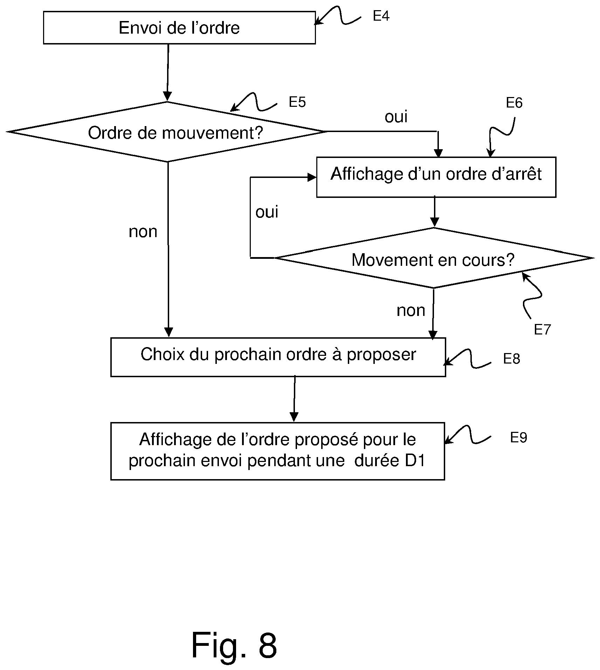

Une autre option, possible pour un dispositif de commande bidirectionnel, consiste à mettre en oeuvre un deuxième mode d'exécution du procédé de fonctionnement décrit ci-après en référence à l'ordinogramme de la figure 8. Ce deuxième mode d'exécution comprend les étapes E5 à E9 de la figure 8 en plus des étapes de la figure 7.

Une fois que l'ordre sélectionné a été envoyé, on détermine, dans une étape E5, la nature de cet ordre. Si ce n'est pas un ordre de mouvement, on peut passer directement à une étape E8 dans laquelle le dispositif choisit le prochain ordre de commande à proposer à l'utilisateur. Si c'est un ordre de mouvement, on passe à une étape E6 dans laquelle, le dispositif de commande choisit et affiche pendant toute la durée du mouvement, un ordre d'arrêt pour, qu'en cas d'urgence, l'utilisateur puisse valider et envoyer rapidement cet ordre. L'utilisateur a bien entendu la possibilité de modifier cet ordre d'arrêt et de choisir tout autre ordre de commande dans la liste des commandes possibles. Si l'utilisateur décide d'envoyer l'ordre d'arrêt proposé ou tout autre ordre de son choix, on retourne à l'étape E4 d'envoi de l'ordre. Sinon, une fois le mouvement terminé, on passe à l'étape E8. L'étape E8 consiste à effectuer le choix du prochain ordre de commande que le dispositif proposera d'envoyer à l'équipement domotique, comme dans l'étape E0. Ce nouvel ordre peut rester affiché sur le dispositif d'affichage pendant une durée prédéterminée D1 (étape E9), cette durée D1 pouvant être paramétrable, avant que le dispositif de commande ne se remette en veille, et ce, afin que l'utilisateur puisse envoyer assez rapidement cet ordre et redémarrer la procédure directement à l'étape E4, sans passer par l'étape de réveil. Pendant la durée D1, l'utilisateur a bien entendu la possibilité de modifier l'ordre proposé.

Une autre option pourrait faire passer le dispositif directement de l'étape E4 d'envoi de l'ordre, à l'étape E8 de choix du prochain ordre à proposer, puis à l'étape E9 d'affichage temporaire de ce nouvel ordre. Cependant, il paraît plus intéressant de proposer un ordre d'arrêt pendant la durée du mouvement, comme décrit plus haut.

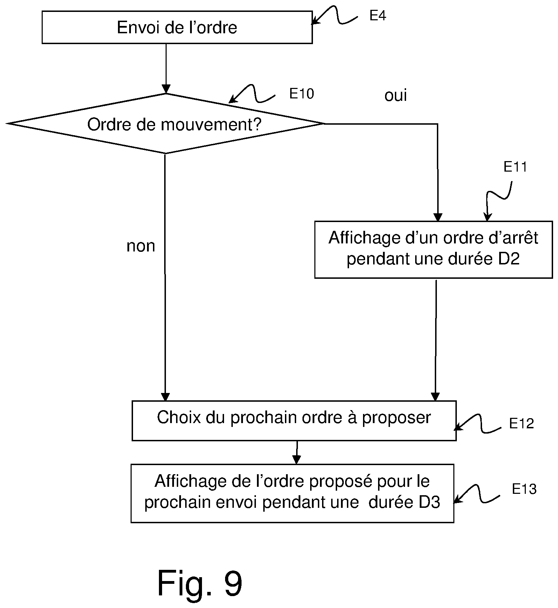

Une autre option consiste, pour un dispositif de commande unidirectionnel à mettre en oeuvre un troisième mode d'exécution du procédé de fonctionnement décrit ci-après en référence à l'ordinogramme de la figure 9. Ce troisième mode d'exécution comprend les étapes E10 à E13 de la figure 9 en plus des étapes de la figure 7. Le dispositif de commande unidirectionnel n'a pas connaissance de l'état de l'équipement commandé, suite à l'envoi de l'ordre réalisé dans l'étape E4.

Dans une étape E10, on peut examiner la nature de l'ordre qui vient d'être envoyé. Si ce n'est pas un ordre de mouvement, on peut passer directement à l'étape E12 dans laquelle le dispositif choisit le prochain ordre de commande à proposer à l'utilisateur. Si c'est un ordre de mouvement, on passe à une étape E11 dans laquelle, le dispositif de commande choisit et affiche pendant une durée prédéterminée D2, cette durée D2 pouvant être paramétrable, un ordre d'arrêt pour, qu'en cas d'urgence, l'utilisateur puisse valider et envoyer rapidement cet ordre. Le dispositif de commande n'étant pas informé de la fin du mouvement, ce temps D2 sera choisi supérieur à un temps standard d'actionnement de l'équipement domotique. Naturellement, pendant cette durée D2, l'ordre proposé peut être modifié par l'utilisateur qui peut immédiatement envoyer l'ordre qu'il a choisi. Si pendant la durée D2, l'utilisateur a choisi d'envoyer l'ordre d'arrêt proposé, ou tout autre ordre de commande qu'il a choisi, on retourne à l'étape E4 d'envoi de l'ordre. A l'issue de la durée D2, si l'utilisateur n'a pas choisi d'envoyer d'ordre d'arrêt ou tout autre ordre de son choix, on passe à l'étape E12 de choix du prochain ordre de commande que le dispositif propose d'envoyer à l'équipement domotique, comme dans l'étape E0. Ce nouvel ordre peut rester affiché sur le dispositif d'affichage pendant une durée prédéterminée D3 (étape E13), avant que le dispositif de commande ne se remette en veille, et ce, afin que l'utilisateur puisse envoyer assez rapidement cet ordre et redémarrer la procédure directement à l'étape E4, sans passer par l'étape de réveil. Comme décrit plus haut, pendant la durée D3, l'utilisateur a la possibilité de modifier l'ordre de commande proposé.

Les étapes décrites sur les figures 8 et 9, ne sont que des exemples non limitatifs de ce qui pourrait être réalisé grâce à l'invention.

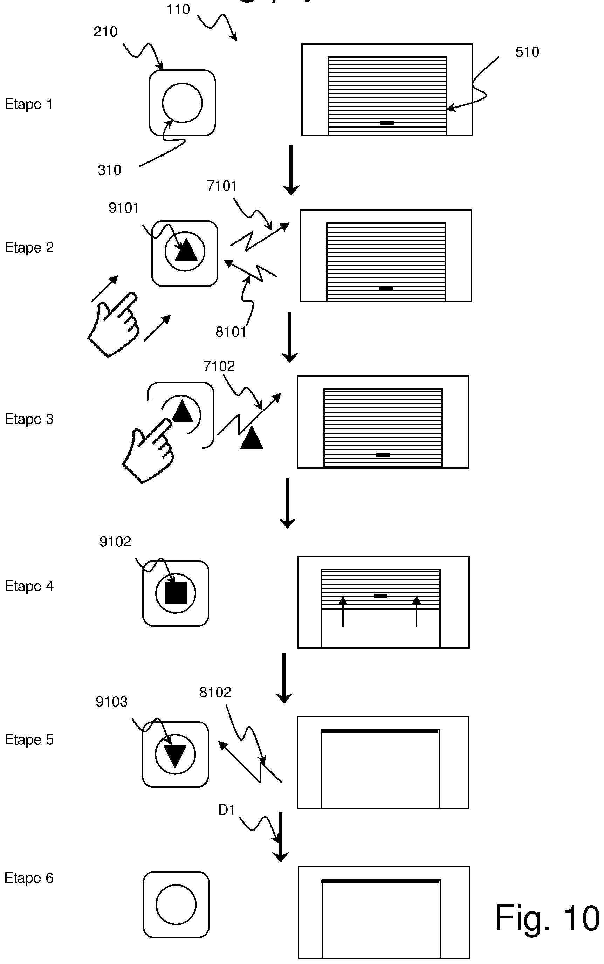

La figure 10 illustre un exemple de mise en oeuvre du procédé de fonctionnement selon l'invention décrit par les figures 7 et 8.

Le réseau domotique 110 met en oeuvre une télécommande sans fil 210 bidirectionnelle, dotée d'un unique bouton 310 équipé d'un dispositif d'affichage, et apte à communiquer avec une porte de garage motorisée 510.

L'étape 1 montre l'installation au repos, dans un état d'attente d'une prochaine commande. La porte 510 est immobile, en position fermée, la télécommande 210 n'émet aucun signal, elle est en veille, le bouton 310 n'affiche aucune information.

L'étape 2 illustre l'approche de la main de l'utilisateur à proximité du bouton de la télécommande 210 ; cette approche provoque le réveil de la télécommande 210, dont la première réaction consiste à demander à la porte quel est son état réel dans une trame 7101 ; la porte répond qu'elle est complètement fermée dans sa trame de réponse 8101, et la télécommande peut alors afficher sur le bouton 310, un élément 9101 représentatif de l'ordre que la télécommande 210 propose d'envoyer à la porte 510. En l'occurrence, dans cet exemple, il s'agit d'un ordre de montée symbolisé par une flèche orientée vers le haut. Lors de l'étape 3, l'utilisateur valide, par exemple par un appui bref sur le bouton 310, l'ordre proposé représenté par l'élément 9101, et la télécommande 210 émet alors une trame de commande 7102 contenant l'ordre validé, à destination de la porte 510. Une fois cette trame 7102 envoyée par la télécommande et reçue par l'actionneur, la porte se met en mouvement jusqu'à atteindre sa butée haute comme illustré dans l'étape 4. Pendant le mouvement de la porte, la télécommande peut optionnellement afficher un ordre d'arrêt symbolisé par un carré plein 9102 afin que l'utilisateur puisse rapidement intervenir en cas de besoin. Une fois que la porte a atteint sa butée haute, elle peut en informer la télécommande en lui envoyant une trame de retour d'information 8102, comme l'illustre l'étape 5. La télécommande peut alors choisir le prochain ordre de commande qu'elle proposera à l'utilisateur pendant une durée prédéterminée D1, dans l'exemple, la télécommande choisit l'ordre de descente symbolisé par une flèche 9103 orientée vers le bas; elle pourrait également se « rendormir » immédiatement, pour n'afficher le prochain ordre que la prochaine fois qu'elle détecte l'approche de la main de l'utilisateur ou lorsque l'utilisateur appuie sur le bouton 310 dans le cas où la télécommande n'est pas équipée de moyens de détection de l'approche de la main de l'utilisateur. A l'issue de la durée D1, la télécommande 210 retourne à un état de repos dans lequel plus aucun ordre n'est affiché (étape 6).

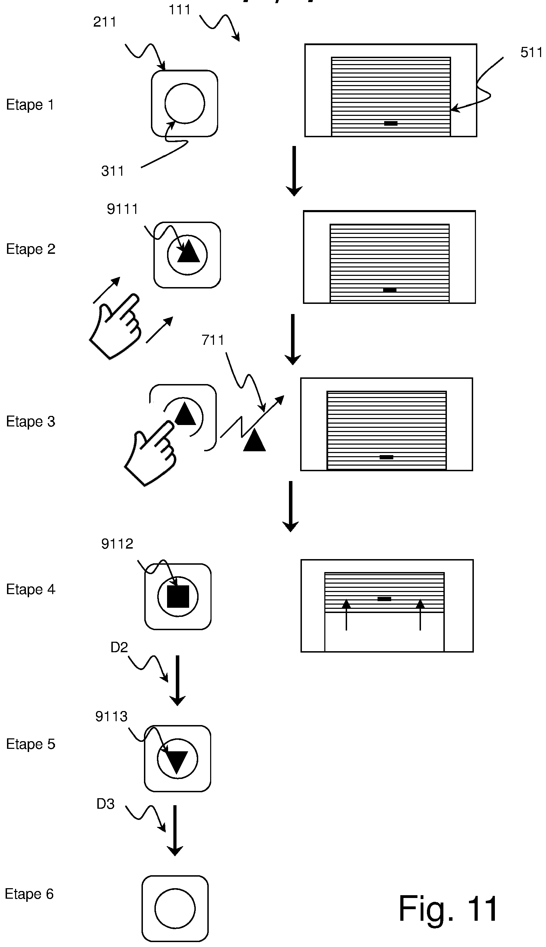

La figure 11 illustre un exemple de mise en oeuvre du procédé de fonctionnement selon l'invention décrit par les figures 7 et 9.

Le réseau domotique 111 met en oeuvre une télécommande sans fil 211 unidirectionnelle, dotée d'un unique bouton 311 équipé d'un dispositif d'affichage, apte à communiquer avec une porte de garage motorisée 511.

Les étapes 1, 2 et 3 sont identiques aux étapes 1, 2, et 3 décrites sur la figure 10. La différence réside dans le fait que cette fois, la télécommande est unidirectionnelle, et donc, elle ne peut pas recevoir de trame d'information de la part de la porte indiquant que le mouvement ou l'action requise est terminée. L'étape optionnelle 4 consiste à proposer à l'utilisateur un ordre d'arrêt symbolisé par un élément 9112, pendant une durée prédéfinie D2. A l'issue de ce laps de temps, la télécommande peut alors choisir le prochain ordre de commande qu'elle proposera à l'utilisateur pendant une durée prédéterminée D3; dans l'exemple, la télécommande choisit l'ordre de descente 9113; elle pourrait également se « rendormir » immédiatement, pour n'afficher le prochain ordre que la prochaine fois qu'elle détecte l'approche de la main de l'utilisateur ou lorsque l'utilisateur appuie sur le bouton 310 dans le cas où la télécommande n'est pas équipée de moyens de détection de l'approche de la main de l'utilisateur. A l'issue de la durée D3, la télécommande 210 retourne à un état de repos dans lequel plus aucun ordre n'est affiché (étape 6).

Dans ce document, « une étape de sélection d'un ordre de commande possible parmi une pluralité d'ordres de commande prédéfinis, pouvant être émis par le dispositif de commande et au moins une étape d'affichage de l'ordre sélectionné par ce dispositif de commande » signifie « une étape de sélection d'au moins un ordre de commande possible parmi une pluralité d'ordres de commande prédéfinis, pouvant être émis par le dispositif de commande et au moins une étape d'affichage de l'au moins un ordre sélectionné par ce dispositif de commande ». Toutefois, le procédé comprend préférentiellement la sélection d'un unique ordre et l'affichage de cet unique ordre, ce qui permet avantageusement l'utilisation d'une interface d'affichage de taille réduite tout en permettant d'afficher un symbole de taille suffisamment grande, pour faciliter sa compréhension par l'utilisateur.

Le ou les ordres sélectionnés ne comprennent pas tous les ordres de commande exécutables par l'équipement domotique, en particulier pas tous les ordres exécutables par l'équipement domotique compte tenu de l'état dans lequel se trouve l'équipement domotique. Le ou les ordres sélectionnés comprennent le ou les ordres les plus pertinents à exécuter compte tenu de l'état actuel de l'équipement domotique ou le ou les ordres qu'il est le plus probable d'exécuter compte tenu de l'état actuel de l'équipement domotique. Le ou les ordres sélectionnés le sont parmi des ordres exécutables par l'équipement domotique et pertinents à l'actionneur.

Ainsi, typiquement si l'équipement est en train de réaliser une action, l'ordre de commande de cette action n'est pas sélectionné (nul besoin en effet, *a priori,* de commander de nouveau cette action). Il en va de même pour les actions qui ne peuvent pas être exécutées par l'équipement domotique compte tenu de son état, par exemple un ordre de montée ne sera pas sélectionné par le dispositif de commande si l'équipement est déjà positionné en butée haute. Par contre, par exemple, un ordre d'interruption d'une action peut être sélectionné pendant l'exécution de l'action.

En outre, si le dispositif de commande est capable, par exemple, de piloter un store à lames orientables dans un premier mode de fonctionnement, et une porte de garage dans un second mode de fonctionnement, il connaît entre autres, des ordres d'orientation de lames. Si c'est la porte de garage qui est en cours de commande, c'est-à-dire que le second mode de fonctionnement a été préalablement sélectionné par l'utilisateur, l'ordre sélectionné ne devrait pas concerner le store, en particulier pas l'orientation des lames du store. Ainsi, si le dispositif de commande est capable de piloter plusieurs équipements domotiques dans différents modes de fonctionnement, le ou les ordres sélectionnés par le dispositif de commande concernent uniquement l'équipement domotique piloté dans le mode de fonctionnement sélectionné par l'utilisateur.

Comme vu précédemment, la sélection d'au moins un ordre est réalisée par le dispositif de commande lui-même.

Comme vu précédemment, l'affichage d'un ordre de commande peut être réalisé par affichage, sur un écran, d'un symbole associé à un bouton de commande de cet ordre ou par affichage, sur un écran tactile, d'un symbole constituant un bouton de commande de cet ordre.

## Revendications

1. Procédé de fonctionnement d'un dispositif (21 ; 22 ; 23 ; 24 ; 25 ; 26 ; 210; 211) de commande d'un équipement domotique (41), **caractérisé en ce qu'**il comporte au moins une étape de sélection d'un ordre de commande possible parmi une pluralité d'ordres de commande prédéfinis, pouvant être émis par le dispositif de commande et au moins une étape d'affichage de l'ordre sélectionné par ce dispositif de commande, le procédé comprenant une étape de définition de priorités entre les différents ordres de commandes qui peuvent être émis, ces priorités étant utilisées par le dispositif de commande lors de l'étape de sélection d'un ordre de commande.

2. Procédé de fonctionnement selon la revendication 1, **caractérisé en ce que** l'ordre de commande sélectionné et affiché par le dispositif de commande est le prochain ordre que le dispositif de commande propose d'envoyer à l'équipement domotique.

3. Procédé de fonctionnement selon l'une des revendications précédentes, **caractérisé en ce que** la sélection de l'ordre affiché par le dispositif de commande résulte d'une analyse de l'historique des ordres précédemment envoyés ou d'une analyse de l'état réel de l'équipement domotique ou d'une séquence d'ordres prédéfinie par l'utilisateur.

4. Procédé de fonctionnement selon l'une des revendications précédentes, **caractérisé en ce qu'**il comporte une étape de modification, selon un choix de l'utilisateur, de l'ordre sélectionné par le dispositif de commande.

5. Procédé de fonctionnement selon la revendication précédente, **caractérisé en ce que** l'étape de modification comprend un défilement de manière séquentielle de la pluralité des ordres de commande pouvant être émis.

6. Procédé de fonctionnement selon l'une des revendications précédentes, **caractérisé en ce qu'**il comprend une étape de validation et d'envoi de l'ordre de commande sélectionné.

7. Procédé de fonctionnement selon la revendication précédente, **caractérisé en ce qu'**il comprend une étape d'affichage d'un ordre d'arrêt suite à l'étape de validation et d'envoi de l'ordre de commande sélectionné.

8. Dispositif de commande (21 ; 22 ; 23 ; 24 ; 25 ; 26 ; 210 ; 211) d'un équipement domotique, **caractérisé en ce qu'**il comporte des moyens matériels (211, 212, 213, 214, 215, 31 ; 32 ; 33, 103 ; 34, 104, 114 ; 35, 105, 1151, 1152, 1153 ; 36) et de traitement aptes à mettre en oeuvre le procédé de fonctionnement selon l'une des revendications précédentes.

9. Dispositif de commande selon la revendication 8, **caractérisé en ce que** les moyens matériels et de traitement comprennent un moyen de sélection d'un ordre de commande et au moins un dispositif d'affichage destiné à afficher un symbole (92 ; 93 ; 94 ; 95 ; 96) représentant l'ordre de commande sélectionné.

10. Dispositif de commande selon la revendication 9, **caractérisé en ce que** les moyens matériels et de traitement comprennent un moyen (32 ; 103 ; 114) de modification de l'ordre sélectionné.

11. Dispositif de commande selon l'une des revendications 9 ou 10, **caractérisé en ce que** les moyens matériels et de traitement comprennent un moyen (214) d'émission de l'ordre sélectionné.

12. Dispositif de commande selon l'une des revendications 9 à 11, **caractérisé en ce qu'**une même touche (32) comprend le dispositif d'affichage et le moyen de modification, cette même touche étant apte à déclencher l'envoi de l'ordre de commande lorsqu'elle est activée.

13. Dispositif de commande selon l'une des revendications 9 à 11, **caractérisé en ce qu'**une première touche (33) comprend le dispositif d'affichage et **en ce qu'**au moins une deuxième touche (103) comprend au moins l'un des moyens de modification ou de déclenchement de l'envoi de l'ordre de commande.

## Patentansprüche

1. Funktionsverfahren einer Vorrichtung (21; 22; 23; 24; 25; 26; 210; 211) zum Steuern eines Haushaltsgeräts (41), **dadurch gekennzeichnet, dass** es wenigstens einen Schritt zur Auswahl eines möglichen Steuerbefehls aus einer Vielzahl von vorgegebenen Steuerbefehlen, die von der Steuervorrichtung ausgegeben werden können, und wenigstens einen Schritt zum Anzeigen des von dieser Steuervorrichtung ausgewählten Befehls umfasst, wobei das Verfahren einen Schritt zur Definition von Prioritäten zwischen den verschiedenen Steuerbefehlen, die ausgegeben werden können, umfasst, wobei diese Prioritäten von der Steuervorrichtung beim Schritt zur Auswahl eines Steuerbefehls verwendet werden.

2. Funktionsverfahren nach Anspruch 1, **dadurch gekennzeichnet, dass** der von der Steuervorrichtung ausgewählte und angezeigte Steuerbefehl der nächste Befehl ist, den die Steuervorrichtung zum Senden an das Haushaltsgerät vorschlägt.

3. Funktionsverfahren nach einem der vorhergehenden Ansprüche, **dadurch gekennzeichnet, dass** die Auswahl des von der Steuervorrichtung angezeigten Befehls aus einer Analyse der Historie der zuvor gesendeten Befehle oder einer Analyse des tatsächlichen Zustands des Haushaltsgeräts oder einer vom Benutzer vorgegebenen Abfolge von Befehlen resultiert.

4. Funktionsverfahren nach einem der vorhergehenden Ansprüche, **dadurch gekennzeichnet, dass** es einen Schritt zur Modifikation des von der Steuervorrichtung ausgewählten Befehls gemäß einer Wahl des Benutzers umfasst.

5. Funktionsverfahren nach dem vorhergehenden Anspruch, **dadurch gekennzeichnet, dass** der Schritt zur Modifikation einen Durchlauf der Vielzahl von Steuerbefehlen, die ausgegeben werden können, in sequentieller Weise umfasst.

6. Funktionsverfahren nach einem der vorhergehenden Ansprüche, **dadurch gekennzeichnet, dass** es einen Schritt zum Validieren und Senden des ausgewählten Steuerbefehls umfasst.

7. Funktionsverfahren nach dem vorhergehenden Anspruch, **dadurch gekennzeichnet, dass** es einen Schritt zum Anzeigen eines Stoppbefehls nach dem Schritt zum Validieren und Senden des ausgewählten Steuerbefehls umfasst.

8. Steuervorrichtung (21; 22; 23; 24; 25; 26; 210; 211) eines Haushaltsgeräts, **dadurch gekennzeichnet, dass** sie Hardware (211, 212, 213, 214, 215, 31; 32; 33, 103; 34, 104, 114; 35, 105, 1151, 1152, 1153; 36) und Verarbeitungsmittel umfasst, die das Funktionsverfahren nach einem der vorhergehenden Ansprüche ausführen können.

9. Steuervorrichtung nach Anspruch 8, **dadurch gekennzeichnet, dass** die Hardware und Verarbeitungsmittel ein Mittel zur Auswahl eines Steuerbefehls und wenigstens eine zum Anzeigen eines Symbols (92; 93; 94; 95; 96) zum Darstellen des ausgewählten Steuerbefehls ausgebildete Anzeigevorrichtung umfassen.

10. Steuervorrichtung nach Anspruch 9, **dadurch gekennzeichnet, dass** die Hardware und Verarbeitungsmittel ein Mittel (32; 103; 114) zur Modifikation des ausgewählten Befehls umfassen.

11. Steuervorrichtung nach Anspruch 9 oder 10, **dadurch gekennzeichnet, dass** die Hardware und Verarbeitungsmittel ein Mittel (214) zum Ausgeben des ausgewählten Befehls umfassen.

12. Steuervorrichtung nach einem der Ansprüche 9 bis 11, **dadurch gekennzeichnet, dass** eine gleiche Taste (32) die Anzeigevorrichtung und das Modifikationsmittel umfasst, wobei diese gleiche Taste das Senden des Steuerbefehls auslösen kann, wenn sie aktiviert wird.

13. Steuervorrichtung nach einem der Ansprüche 9 bis 11, **dadurch gekennzeichnet, dass** eine erste Taste (33) die Anzeigevorrichtung umfasst und dass wenigstens eine zweite Taste (103) wenigstens eines der Mittel zur Modifikation oder zum Auslösen des Sendens des Steuerbefehls umfasst.

## Claims

1. Method of operation of a device (21; 22; 23; 24; 25; 26; 210; 211) for controlling a home-automation appliance (41), **characterized in that** it comprises at least one step of selecting a possible control command from among a plurality of predefined control commands, that may be sent by the control device and at least one step of displaying the command selected by this control device, the method comprising a step of defining priorities between the various control commands which may be sent, these priorities being used by the control device in the step of selecting a control command.

2. Method of operation according to Claim 1, **characterized in that** the control command selected and displayed by the control device is the next command that the control device proposes to send to the home-automation appliance.

3. Method of operation according to one of the preceding claims, **characterized in that** the selection of the command displayed by the control device results from an analysis of the log of the previously sent commands or an analysis of the actual state of the home-automation appliance or a sequence of commands which is predefined by the user.

4. Method of operation according to one of the preceding claims, **characterized in that** it comprises a step of modifying, according to a choice of the user, the command selected by the control device.

5. Method of operation according to the preceding claim, **characterized in that** the modifying step comprises a scrolling in a sequential manner of the plurality of the control commands that may be sent.

6. Method of operation according to one of the preceding claims, **characterized in that** it comprises a step of validating and sending the control command selected.

7. Method of operation according to the preceding claim, **characterized in that** it comprises a step of displaying a stop command subsequent to the step of validating and sending the control command selected.

8. Control device (21; 22; 23; 24; 25; 26; 210; 211) for a home-automation appliance, **characterized in that** it comprises hardware means (211, 212, 213, 214, 215, 31; 32; 33, 103; 34, 104, 114; 35, 105, 1151, 1152, 1153; 36) and processing means able to implement the method of operation according to one of the preceding claims.

9. Control device according to Claim 8, **characterized in that** the hardware means and processing means comprise a means for selecting a control command and at least one display device intended to display a symbol (92; 93; 94; 95; 96) representing the control command selected.

10. Control device according to Claim 9, **characterized in that** the hardware means and processing means comprise a means (32; 103; 114) for modifying the command selected.

11. Control device according to one of Claims 9 or 10, **characterized in that** the hardware means and processing means comprise a means (214) for sending the command selected.

12. Control device according to one of Claims 9 to 11, **characterized in that** one and the same key (32) comprises the display device and the modifying means, this same key being able, when it is activated, to trigger the send of the control command.

13. Control device according to one of Claims 9 to 11, **characterized in that** a first key (33) comprises the display device and **in that** at least one second key (103) comprises at least one of the means for modifying or triggering the send of the control command.
